Europäisches Patentamt

European Patent Office

Office européen des brevets

(19)

(11) Numéro de publication : **0 326 476 B1**

(12) **FASCICULE DE BREVET EUROPEEN**

(45) Date de publication du fascicule du brevet :
**15.01.92 Bulletin 92/03**

(51) Int. Cl.⁵ : **G01H 9/00**, G01V 1/20

(21) Numéro de dépôt : **89400189.0**

(22) Date de dépôt : **24.01.89**

(54) **Hydrophone à fibre optique et antenne associant une série d'hydrophones.**

(30) Priorité : **25.01.88 FR 8800781**

(43) Date de publication de la demande :
**02.08.89 Bulletin 89/31**

(45) Mention de la délivrance du brevet :
**15.01.92 Bulletin 92/03**

(84) Etats contractants désignés :
**DE GB SE**

(56) Documents cités :
**EP-A- 0 104 932**
**EP-A- 0 129 972**
**OPTICS LETTERS, vol. 11, no. 5, mai 1986,**
**pages 333-335, Optical Society of America,**
**New York, US; H.M. XIE et al.: "Side-hole fiber**
**for fiber-optic pressure sensing"**
**FIRST INTERNATIONAL CONFERENCE ON**
**OPTICAL FIBRE SENSORS, 26-28 avril 1983,**
**pages 132-135, Londres, GB; S.A. AL-CHA-**
**LABI et al.: "Partially coherent sources in**
**interferometric sensors"**

(73) Titulaire : **THOMSON-CSF**
**51, Esplanade du Général de Gaulle**
**F-92800 Puteaux (FR)**

(72) Inventeur : **Lefèvre, Hervé**
**THOMSON-CSF SCPI 19, avenue de Messine**
**F-75008 Paris (FR)**
Inventeur : **Rojas, Dominique**
**THOMSON-CSF SCPI 19, avenue de Messine**
**F-75008 Paris (FR)**
Inventeur : **Turpin, Marc**
**THOMSON-CSF SCPI 19, avenue de Messine**
**F-75008 Paris (FR)**

(74) Mandataire : **Turlèque, Clotilde et al**
**THOMSON-CSF SCPI**
**F-92045 PARIS LA DEFENSE CEDEX 67 (FR)**

Jouve, 18, rue Saint-Denis, 75001 PARIS

## Description

L'invention se rapporte à un hydrophone à fibre optique, et s'applique à la réalisation d'antennes remorquées multi-capteurs associant une série d'hydrophones.

L'effet élasto-optique dans les fibres de silice a été reconnu comme un processus attrayant pour réaliser des hydrophones performants : une pression isotrope appliquée sur une fibre monomode modifie sa longueur ainsi que ses indices de réfraction, induisant une variation de la phase de l'onde qui s'y propage. Ce déphasage est mesuré dans un montage interférométrique, généralement un interféromètre de MACH-ZEHNDER, qui compare le déphasage créé dans une bobine de référence non soumise au champ de pression à celui créé dans une bobine de détection sensible à ce champ.

Bien que l'effet à mesurer soit intrinsèquement faible, de grandes sensibilités sont possibles à cause des faibles pertes dans les fibres de silice, qui, par l'utilisation de longueurs de fibres importantes permettent de cumuler des déphasages élémentaires.

Cette approche, qui utilise des fibres monomodes conventionnelles, bute cependant sur le problème de la dépendance thermique parasite. En effet, l'indice de réfraction de la silice varie de $10^{-5}$ par degré Celsius et produit des déphasages, lors de variations de température, très supérieurs aux déphasages créés par les variations de pression.

Pour résoudre ce problème, il a été proposé d'utiliser une fibre à structure évidée dite "FASE" qui améliore le rapport d'efficacité pression/température : au lieu d'une structure cylindrique pleine pour une fibre optique classique, cette fibre comporte, de chaque côté du coeur qui guide la lumière deux trous. Cette structure permet d'une part de créer une biréfringence résiduelle importante en l'absence de contrainte extérieure, obtenue au moment du fibrage, et d'autre part d'amplifier de manière anisotrope l'effet d'une contrainte extérieure sur le coeur de la fibre, une pression homogène appliquée sur une telle fibre se transmettant préférentiellement suivant l'axe perpendiculaire aux axes des trous.

La mesure du déphasage dans une telle fibre à structure évidée se fait en comparant les deux ondes se propageant dans la même fibre selon les deux axes perpendiculaires, ce qui limite les problèmes de dépendance thermique : la fonction de séparateur d'entrée est remplie par un couplage à 45° des axes neutres de la fibre à structure évidée, et la fonction de séparateur combineur de sortie est assurée par un polariseur analyseur de sortie également à 45° des axes neutres de la fibre.

L'utilisation d'un interféromètre utilisant une telle fibre permet d'éliminer le problème de l'équilibrage thermique des deux bras de l'interféromètre lorsqu'ils sont physiquement distincts, puisque le déphasage dû à une variation de température est le même suivant les deux axes.

L'interféromètre a une réponse sinusoïdale en fonction du déphasage entre les deux bras ; pour les extréma de la courbe sinusoïdale il y a donc un problème de sensibilité que l'on résoud classiquement en superposant au déphasage créé par l'onde acoustique une modulation de phase. Pour la réalisation d'hydrophones à fibres optiques dans lesquels la mesure est faite à une certaine distance du capteur de pression, la nécessité de cette modulation conduit alors :

— soit à utiliser de grandes longueurs de fibres de liaison en entrée et en sortie, et également une grande longueur de câble électrique pour alimenter le modulateur proche du capteur,

— soit à éloigner la bobine de détection du capteur de la source et du détecteur, mais alors les fibres de liaison sont partie intégrante de l'interféromètre et peuvent produire des déphasages parasites.

Pour résoudre ce problème il a été proposé d'utiliser l'interférométrie en lumière blanche, c'est-à-dire d'utiliser

— une source à spectre large et donc à faible cohérence temporelle,

— associée à un premier interféromètre qui possède deux bras déséquilibrés, tels que la différence de marche entre les deux bras soit supérieure à la longueur de cohérence de la source,

— puis après passage dans une fibre de liaison à utiliser un second interféromètre décalé de la même longueur que le premier pour remettre en coïncidence les trains d'onde et produire les interférences.

Cette méthode permet de créer les interférences fonction de la différence des déphasages, insensibles au déphasage introduit par la fibre de liaison. De plus l'insertion d'un modulateur dans l'un des deux interféromètres permet d'obtenir l'avantage de la sensibilité au voisinage des extréma, pour le traitement décrit ci-dessus.

L'invention a pour objet un hydrophone à fibre optique permettant de résoudre simultanément le problème de la sensibilité, celui de la dépendance thermique, et celui de la mesure à distance du déphasage, utilisant l'interférométrie, mais de structure très facile à ajuster, les mesures étant seulement dépendantes du déphasage à mesurer caractéristique des ondes de pression à détecter.

La solution proposée est particulièrement adaptée à la réalisation d'antennes remorquées multi-capteurs, dans lesquelles avec une référence unique de multiplexage on peut mesurer les déphasages issus d'un grand nombre de capteurs répartis sur une certaine longueur, sans perte sensible occasionnée par ce multiplexage.

Selon l'invention un hydrophone à fibre optique, est caractérisé en ce qu'il comporte :

— une source à spectre large, par exemple du type diode super-luminescente, polarisée linéairement,

— une première fibre optique à structure évidée, dite de compensation non soumise au champ de pression à détecter, suivie d'un premier polariseur d'axe à 45° des axes neutres de la fibre eux-mêmes à 45° de la polarisation de la source, formant un interféromètre,

— un capteur passif soumis au champ de pression comportant une seconde fibre optique à structure évidée d'axes neutres inversés par rapport à ceux de la fibre de compensation couplée au premier polariseur et suivie d'un second polariseur à 45° des axes neutres de la fibre, formant un second interféromètre à la sortie duquel les différences de marche entre les deux polarisations quine sont pas dues au champ de pression sont compensées,

— un détecteur (D)

— et un circuit de traitement du rayonnement détecté par le détecteur.

L'invention a également pour objet une antenne hydrophonique associant une série d'hydrophones à fibre optique, caractérisée en ce qu'elle comporte :

— une source à spectre large, par exemple du type diode super-luminescente, modulée en impulsions,

— une première fibre optique à structure évidée suivie d'un premier polariseur à 45° des axes neutres de la fibre, formant un compensateur

— une fibre optique sur laquelle sont répartis N coupleurs de dérivation,

— N capteurs passifs soumis au champ de pression reliés aux N coupleurs de dérivation comportant chacun une fibre optique à structure évidée d'axes neutres inversés par rapport à ceux de la fibre du compensateur, suivie d'un polariseur à 45° des axes neutres de la fibre, et d'une fibre monomode de sortie,

— une fibre multimode de collecte dans laquelle le rayonnement issu des capteurs est couplé par des épissures formées entre les fibres monomodes de sortie des capteurs et la fibre multimode de collecte,

— un détecteur D,

— et un circuit de traitement du rayonnement détecté par le détecteur, effectuant le démultiplexage et la démodulation des signaux résultant du passage dans les différents capteurs répartis.

L'invention sera mieux comprise et d'autres caractéristiques apparaîtront à l'aide de la description qui suit en référence aux figures annexées.

— la figure 1 est le schéma en coupe d'une fibre à structure évidée, utilisée dans l'hydrophone selon l'invention ;

— les figures 2a, 2b et 2c sont des schémas explicatifs montrant l'utilisation d'une fibre à structure évidée comme capteur de champ acoustique ;

— la figure 3 représente les signaux issus du détecteur de l'hydrophone en fonction du déphasage ;

— la figure 4 est le schéma d'un capteur hydrophonique élémentaire suivant l'invention ;

— la figure 5 est le schéma d'une antenne hydrophonique multi-capteurs pour mesure à distance suivant l'invention.

L'hydrophone à fibre optique suivant l'invention utilise une bobine de fibre à structure évidée telle que décrite ci-dessus et connue dans l'art antérieur par exemple par l'article H.M. XIE et al intitulé "Side-hole fiber for fiber-optic pressure sensing, OPTICS LETTERS, vol. 11, n°5, mai 1986.

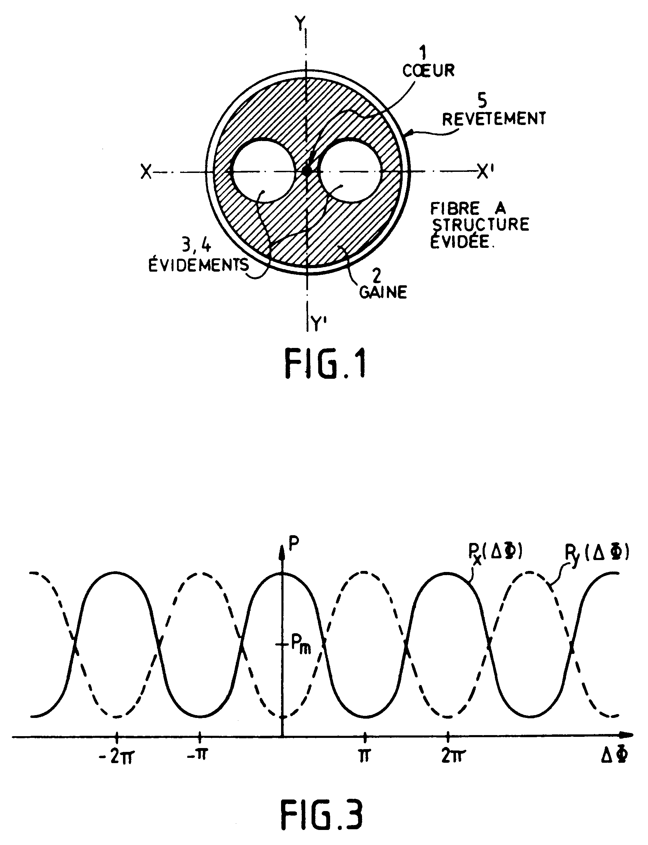

Sur la figure 1 qui représente la coupe d'une fibre à structure évidée ou "FASE", le coeur 1 est entouré d'une gaine 2 dans laquelle deux évidements 3 et 4 ont été formés lors du fibrage, à une faible distance du coeur et de la surface de référence de la fibre, elle-même recouverte d'un revêtement 5. Ces évidements s'étendent sur toute la longueur de la fibre, parallèlement à son axe, leurs centres et le centre de la fibre étant alignés (axe XX' sur la figure 1). En conséquence une pression homogène appliquée sur une telle fibre se transmet préférentiellement suivant l'axe YY' perpendiculaire aux évidements. De plus cette structure tend à confiner les lignes de force dans la paroi centrale, de faible section par rapport à la section de la fibre, et augmente donc la compression au niveau du coeur (partie dans laquelle le rayonnement optique se propage) par rapport à la pression extérieure.

Comme indiqué ci-dessus cette contrainte anisotrope crée par effet élasto-optique de la biréfringence, c'est-à-dire un déphasage supplémentaire différent entre les ondes se propageant respectivement perpendiculairement ou parallèlement à l'axe de contrainte YY'.

Le déphasage mesuré est celui qui résulte des deux ondes se propageant dans la même fibre selon ces deux axes orthogonaux, à des vitesses différentes dont l'écart varie avec la pression extérieure.

Comme indiqué ci-dessus cette structure permet d'une part de créer une biréfringence résiduelle importante même en l'absence de contrainte externe, et d'autre part d'amplifier de manière anisotrope l'effet sur le coeur de la fibre d'une contrainte extérieure. Le déphasage mesuré par les techniques interférométriques en utilisant les deux axes neutres de la fibre comme deux bras d'un interféromètre peut conduire à des sensibilités en pression de l'ordre de $20 \times 10^{-5}$ rad/Pa · m et une sensibilité thermique de l'ordre de 0,3 rad/°C · m. Ces valeurs sont à comparer aux valeurs obtenues pour une fibre conventionnelle :

sensibilité en pression : $4 \times 10^{-5}$ rad/Pa · m et sensibilité en température 100 rad/°C · m ; ce qui permet une réduction du rapport des sensibilités thermiques et acoustiques de l'ordre de trois ordres de grandeurs. Mais il n'en reste pas moins qu'il faut isoler les effets dûs à la pression des effets dûs à la température alors que les premiers sont de quelques ordres de grandeur inférieurs aux seconds.

Le capteur élémentaire utilisant une telle fibre à structure évidée peut être un capteur ponctuel, même lorsqu'une grande longueur de fibre est utilisée pour mesurer de très faibles pressions : en effet une bobine de fibre "FASE" peut être conditionnée dans un très faible volume.

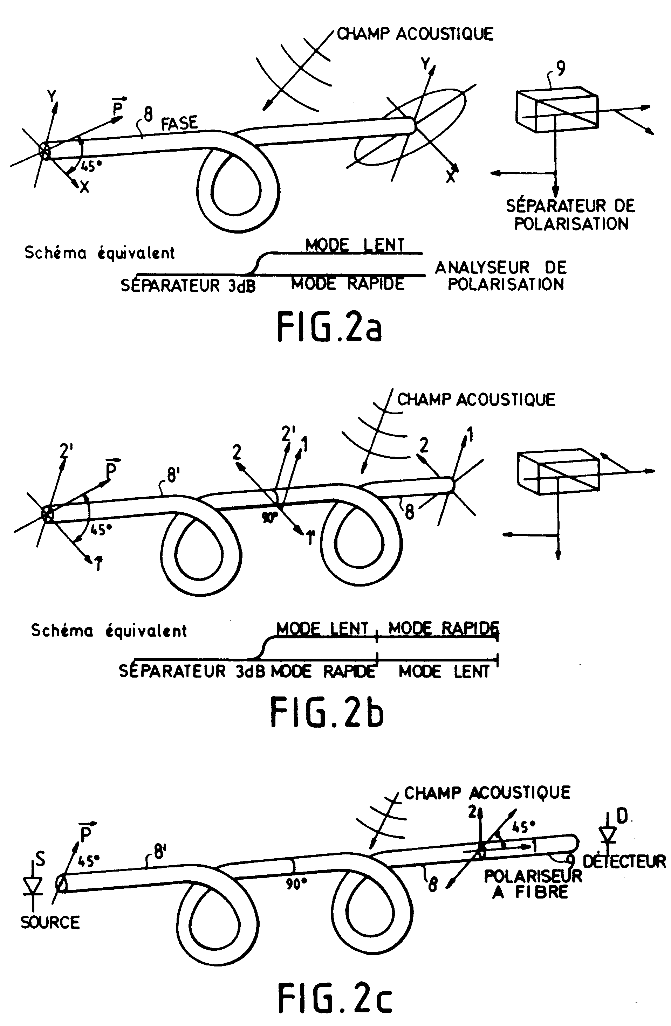

Les figures 2a, 2b, 2c expliquent le fonctionnement du capteur élémentaire :
une source permet de coupler à la fibre à structure évidée représentée sur la figure 2a une onde de polarisation $\overline{P}$ orientée à 45° des axes neutres X et Y de la fibre optique 8, pour équilibrer les deux ondes se propageant selon ces deux axes neutres, rapide et lent respectivement. La différence d'indice introduit un déphasage, croissant avec la distance, entraînant une ellipticité variable selon la valeur locale du déphasage, passant périodiquement d'une polarisation circulaire (modes en quadrature) à une polarisation rectiligne (modes en phase ou en opposition de phase). A la sortie de la fibre, l'état de polarisation dépend de la longueur de cette fibre, rapportée à la longueur de battement. En l'absence de contrainte, cet état de polarisation peut être analysé. En présence de contrainte, il y a une modification de la biréfringence (différence d'indice $\Delta n$ entre les deux modes), donc de la longueur de battement qui en dépend, et en conséquence de l'état de polarisation à la sortie de la fibre. Un séparateur de polarisation 9, prisme de Wollaston par exemple, permet de séparer pour les faire interférer les deux composantes qui se sont propagées à deux vitesses différentes. On observe ainsi à la sortie une modulation d'intensité résultant du déphasage entre les deux voies. Le schéma équivalent de cette structure élémentaire est un séparateur à 3 dB équivalent au couplage à 45° des axes neutres, puis un même trajet suivi à deux vitesses différentes par les deux composantes, et un analyseur de polarisation.

Comme indiqué ci-dessus, la dépendance en température dans un interféromètre utilisant une seule fibre est bien inférieure à celle existant dans un interféromètre utilisant deux fibres différentes. Cependant cette dépendance en fonction de la température existe toujours. Elle peut être annulée en utilisant deux longueurs de fibres à structure évidée raccordées, de telle manière que leurs axes lents et rapides s'opposent. Pour cela il suffit d'utiliser une fibre à structure évidée, de la sectionner en son milieu et de faire tourner une extrémité de 90° avant de la raccorder à l'autre. Une telle structure est représentée sur la figure 2b, et permet d'annuler strictement la dépendance en température, les axes neutres 1 et 2 du second morceau de fibre 8 sont respectivement colinéaires aux axes neutres 2' et 1' du premier morceau de fibre 8'. Dans cette structure, le premier morceau de la fibre 8'doit subir uniquement un déphasage dû à la température, cette première partie de la fibre étant en dehors du champ de pression acoustique, et la seconde partie de la fibre 8 subit à la fois un déphasage dû à la température et un déphasage dû à la pression acoustique, le déphasage dû à la température compensant celui réalisé dans la première partie. Le schéma équivalent comporte à la suite du séparateur à 3 dB un premier chemin correspondant aux axes neutres 1' et 2 avec une partie à vitesse rapide et une partie à vitesse lente et un deuxième chemin correspondant à la polarisation selon les axes neutres 2' et 1 avec une partie à vitesse lente suivi d'une partie à vitesse rapide. Ainsi les déphasages dûs à la température sont les mêmes pour les deux ondes.

La figure 2c illustre la structure élémentaire, pour un capteur "tout-fibre" : une source S couple une lumière polarisée selon $\overline{P}$ dans la fibre en deux morceaux ; un polariseur à fibre à la sortie de l'ensemble d'axe orienté à 45° des axes neutres de la fibre de sortie crée des interférences entre les deux composantes, selon l'axe du polariseur, des deux ondes transmises à vitesses différentes dans la fibre ; un détecteur D permet de mesurer l'intensité résultant des interférences.

Suivant l'invention, le rayonnement transmis dans la fibre est donc polarisé, et le principe de polarimétrie mis en oeuvre présente une différence fondamentale avec celui employé dans les dispositifs classiques (interféromètre de MACH-ZEHNDER ou de MICHELSON) : la distance entre les franges détectée à la sortie de l'interféromètre (correspondant à un déphasage relatif de 2¶ pour deux franges consécutives) est liée non plus à la longueur d'onde mais à la longueur de "battement", c'est-à-dire à la longueur au bout de laquelle le déphasage dû à la biréfringence est égal à 2¶. Cette longueur de battement $L_B$ est égale à la longueur d'onde $\lambda$ divisée par la biréfringence intrinsèque $n_o$, c'est-à-dire la biréfringence en l'absence de contrainte extérieure. Cette biréfringence $n_o$ est de l'ordre de $10^{-4}$. La longueur de battement est donc de l'ordre de $10^{+4}\lambda$, soit 10 mm environ pour une longueur d'onde $\lambda$ = 1 μm.

S'agissant d'ajuster une longueur de fibre de 100 mètres à une fraction de distance d'inter-frange, notamment pour un hydrophone multi-capteurs, pour toute une série de capteurs que l'on souhaite identiques en sensibilité, l'ajustement est beaucoup plus facile lorsque l'interfrange est 10 mm que lorsqu'il est égal à 1 μm. C'est-à-dire égal à une longueur d'onde dans les dispositifs interférométriques classiques. Cette structure est donc particulièrement bien adaptée à la mesure de pression et permet de réaliser un capteur à fibre optique simple et de grande sensibilité.

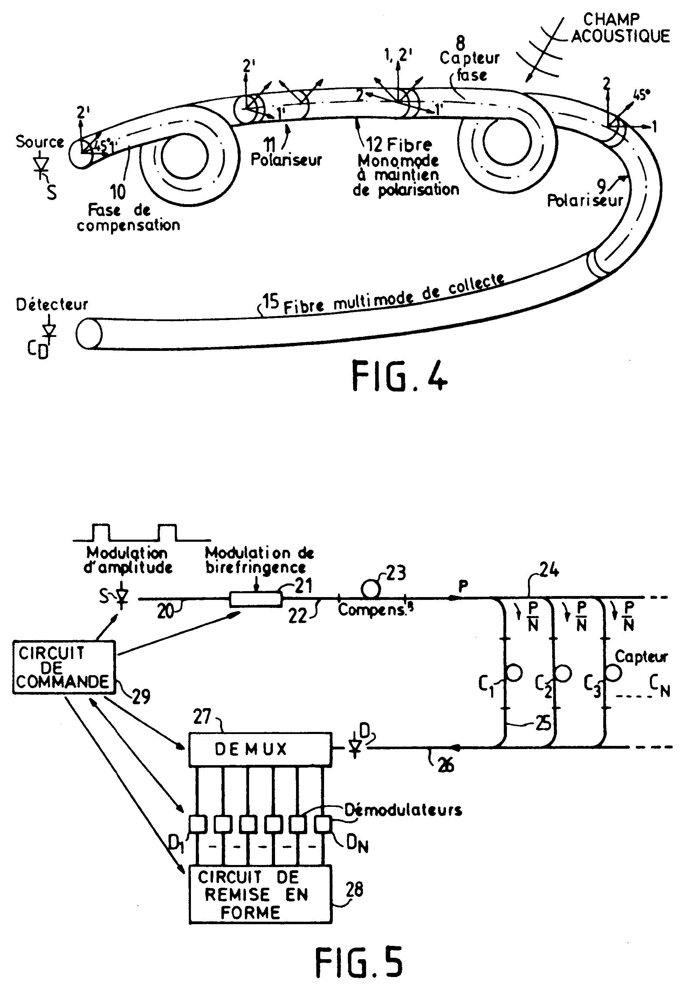

La figure 3 représente la variation de la puissance de sortie P dans un interféromètre mesurée après polariseur de sortie, en fonction du déphasage. Cette variation est sinusoïdale, et un problème se pose pour la mesure au voisinage des maxima. Classiquement pour résoudre ce type de problème on réalise une modulation de phase qui se superpose à la modulation de phase à mesurer résultant du champ de pression acoustique. Dans le cas par exemple d'une modulation superposée sinusoïdale $Q_0 \sin 2\pi ft$, le signal d'interférence résultant se trouve modulé par des composantes aux différentes harmoniques de la fréquence f de modulation. L'amplitude des harmoniques impaires est proportionnelle à $\sin\Phi$, et celle des harmoniques paires à $\cos\Phi$. Ces amplitudes sont mesurées avec des démodulateurs à fréquence f et 2f par exemple.

Le problème qui se pose alors pour l'utilisation d'un tel capteur comme hydrophone, couplé à distance à des moyens de mesure, est le suivant : pour lire à distance les variations d'intensité résultant de l'interférométrie dans une fibre optique, il faut soit utiliser de grandes longueurs de fibres de liaison en entrée et en sortie du capteur, et également une grande longueur de câble électrique pour alimenter le modulateur, soit éloigner le capteur du modulateur, mais alors les fibres de liaison font partie intégrante de l'interféromètre et peuvent produire des déphasages parasites. Pour résoudre ce problème, il est intéressant d'utiliser le concept connu d'interférométrie en "lumière blanche" (source à spectre large), et de l'appliquer aux ondes guidées (voir par exemple l'article de S'A. Al Chalabi et al in Proceedings, 1st international Conference on Optical Fiber Sources, IEEE April 83, page 132, "Partially coherent sources in interferometric sensors"). Pour cela on utilise une source optique à spectre large : type diodes super-luminescentes par exemple. L'hydrophone selon l'invention utilise également ce principe d'interférométrie en lumière "blanche".

En effet dans un interféromètre à deux bras, le contraste des interférences disparaît lorsque la différence de chemin optique entre les deux bras est supérieure à la longueur de cohérence $L_C$ de la source optique, elle-même inversement proportionnelle à la largeur du spectre $\Delta\lambda$. Pour une source de type DSL, la longueur de cohérence vaut une vingtaine de longueur d'onde en moyenne ($L_C = \Delta\lambda/\lambda^2$).

Si on utilise un second interféromètre déséquilibré de la même façon que le premier on peut récupérer des franges constrastées : en effet, en considérant que la source émet des trains d'ondes de longueur $L_C$. S'il n'y a pas recouvrement des trains d'ondes en sortie de l'interféromètre, les franges perdent leur constraste. Si les deux trains d'onde en série issus d'une porte de l'interféromètre passent dans un second interféromètre déséquilibré de la même façon que le premier, il y a en sortie de l'ensemble quatre trains d'ondes l'un qui a suivi deux chemins courts, deux intermédiaires qui se recouvrent et ont suivi respectivement des chemins court-long et long-court, et un dernier qui a suivi les deux chemins longs.

Les deux trains d'ondes qui se recouvrent créent des interférences contrastées dépendant de la différence entre les déphasages de chacun des deux interféromètres, le chemin optique entre ces deux interféromètres n'intervenant pas.

Cette technique de déport permet d'appliquer à distance la méthode de modulation de phase destinée à éviter les pertes de sensibilité lorsque le système dérive vers un extrémum de la réponse interférométrique.

Le modulateur de phase peut être un modulateur de biréfringence, réalisé par exemple en optique intégrée sur niobate de lithium, par modulation différentielle de phase entre les modes TE et TM, par commande électrique. Selon l'invention le système comporte donc une source, un interféromètre modulé, un interféromètre de détection, délocalisé par rapport à la source et au détecteur, et qui peut donc être immergé loin du centre de traitement, entièrement passif, et un détecteur, ou de manière équivalente une source puis un interféromètre de détection délocalisé et entièrement passif suivi de l'interféromètre modulé et du détecteur.

Pratiquement l'hydrophone élémentaire à fibre à structure évidée selon l'invention comporte dans un mode de réalisation représenté sur la figure 4 :

— une source à spectre large (diode super-luminescente "DSL" par exemple), polarisée linéairement, soit par construction soit au moyen d'un polariseur en sortie de cette source ;

— une fibre à structure évidée 10, dite de compensation non soumise au champ de pression, d'axes neutres 1′ et 2′ à 45° de la polarisation de la source, formant l'interféromètre destiné à compenser la différence de marche induite par l'interféromètre de mesure,

— un polariseur à fibre 11 permettant de créer les interférences entre modes à la sortie de cette première FASE, selon l'axe de polarisation orienté à 45° des axes neutres 1′ et 2′ ;

— une fibre monomode à conservation de polarisation 12, permettant le déport de l'élément sensible au champ de pression, d'axes à 45° des axes neutres 1′ et 2′ ;

— l'extrémité de cette fibre monomode 12 à conservation de polarisation est couplée à l'extrémité d'une seconde fibre à structure évidée "FASE" 8, d'axes neutres 1 et 2 à 90° des axes neutres 1′ et 2′ de la première sensible au champ de pression ;

— la sortie de la fibre à structure évidée est à nouveau couplée à un polariseur à fibre 9, à 45° des axes neutres 1 et 2 de la fibre à structure évidée ;
— la face de sortie de la fibre polariseur est collée à la face d'entrée d'une fibre multimode 15 de collecte couplée au détecteur de sortie, D.

Comme indiqué ci-dessus ce système est complété par un interféromètre modulé placé soit en entrée entre la source et le polariseur d'entrée, soit en sortie après le polariseur de sortie. Cet interféromètre modulé peut être un polarimètre utilisant, comme modulateur, un circuit optique intégré droit avec une différence de modulation maximisée entre les modes TE et TM.

L'intérêt d'utiliser des polarimètres plutôt que des interféromètres classiques (MICHELSON ou MACH-ZEHNDER) est la plus grande facilité d'ajustage du décalage entre les deux bras. En effet, lorsqu'on utilise une source à spectre large de type diode super-luminescente, la longueur de cohérence $L_c$ est typiquement de 20 à 30 longueurs d'onde, soit une vingtaine de micromètres. Ces longueurs sont impossibles à contrôler pour des longueurs de l'ordre de un mètre.

Comme indiqué ci-dessus, avec un polarimètre, il faut ajuster les longueurs à une vingtaine de longueurs de battement $L_B$, $L_B$ étant la longueur au bout de laquelle les modes lent et rapide sont décalés d'une longueur d'onde. La longueur de battement est de l'ordre de 10 à 20 millimètres. La sensibilité nécessaire à un hydrophone demande 50 à 100 mètres de fibre à structure évidée, soit 2500 à 10000 longueurs de battement. La biréfringence résiduelle varie typiquement de $10^{-3}/°C$ conduisant à une dépendance thermique de 2,5 à $10\lambda/°C$ ; ces 2500 à 10000 longueurs de battement signifient que le décalage du polarimètre est de 2500 à 10000 longueurs d'onde, ce qui est très supérieur aux 20 longueurs d'onde de cohérence de la source. Si on place, en série avec la fibre à structure évidée, une fibre à conservation de polarisation ordinaire dont les axes lent et rapide sont inversés par rapport aux axes de la fibre à structure évidée, on peut réduire le décalage à une longueur légèrement supérieure à la longueur de cohérence soit par exemple $100\lambda$, et la dépendance thermique ne sera plus alors que de $0,1\lambda/°C$. La fibre à conservation de polarisation ayant une sensibilité négligeable à la pression compense la dépendance thermique tout en conservant la dépendance en pression.

Il a été indiqué ci-dessus que l'on souhaitait également pouvoir répartir sur une certaine longueur un grand nombre de capteurs éventuellement remorqués, et il est donc tout à fait souhaitable de pouvoir lire les informations issues de ces différents capteurs au moyen d'un seul dispositif de lecture, par multiplexage. Pour ce faire, il est connu qu'on peut associer des techniques de lecture à distance à un multiplexage temporel : pour cela le rayonnement issu d'une source à spectre large est modulé en impulsion de durée $\tau$, puis est transmis à différents interféromètres ayant le même décalage, $\Delta L$. Les impulsions qui sont passées dans les différents interféromètres reviennent, séparées dans le temps, sur le détecteur après être repassées dans le même interféromètre modulé. Le problème posé par ce type de technique est qu'elle utilise des fibres monomodes, et les coupleurs monomodes utilisés pour l'adressage sont nécessairement symétriques ; c'est-à-dire que si l'on souhaite recoupler toute la puissance qui a traversé un interféromètre sur une fibre unique de retour, on perd la lumière provenant des interféromètres situés en amont.

Pour éviter ce problème il est intéressant de pouvoir utiliser une fibre de collecte de retour multimode. Dans ce cas il est possible de réaliser un couplage efficace de la lumière issue de la fibre monomode de sortie d'un interféromètre sur la fibre multimode de collecte sans pour autant perdre celle déjà couplée en amont sur cette même fibre multimode. Mais dans ce cas, l'interféromètre modulé ne pourra être couplé efficacement à la fibre multimode de sortie. Il est donc nécessaire de placer l'interféromètre modulé monomode entre la source et les capteurs élémentaires.

Le schéma synoptique d'une antenne hydrophonique multi-capteurs selon l'invention est représenté sur la figure 5.

La source à spectre large S, est modulée en impulsions et couplée à une première fibre monomode 20. Cette fibre est suivie d'un interféromètre modulé monomode 21 et qui se prolonge par une seconde fibre monomode 22. Une fibre de compensation associée à un polariseur, 23, est placée à la suite et transmet une puissance optique P à une fibre monomode de séparation 24 sur laquelle sont répartis N points de couplage, selon le nombre N de points de mesure souhaités. Chaque prise est alors reliée à un capteur élémentaire $C_1$, $C_2$,... $C_N$, c'est-à-dire à une bobine de fibre à structure évidée suivie d'un polariseur à fibre. Ces capteurs élémentaires sont reliés, chacun à une fibre monomode de liaison, multiprise, 25, vers une fibre multimode de collecte 26, elle-même reliée au détecteur de sortie D. Le signal électrique fourni par le détecteur est alors transmis à un démultiplexeur 27 dont les sorties sont reliées à des démodulateurs $D_1$... $D_N$, eux-mêmes reliés à un circuit de remise en forme 28. Un circuit de commande 29 effectue la commande de modulation d'amplitude de la source, la commande du modulateur de biréfringence et les commandes des circuits de sortie, démultiplexeur, démodulateurs, et remise en forme.

Dans les dispositifs classiques, le multiplexage d'un grand nombre de capteurs apporte généralement une dégradation très rapide du rapport signal à bruit. L'adressage temporel effectué ici présente l'efficacité maximale car pour une puissance optique donnée P et un nombre de capteurs N, on peut disposer théoriquement d'une puissance optique P/N pour chaque capteur. Les capteurs étant limités par le bruit photonique, le rapport signal à bruit ne décroît théoriquement qu'en fonction de √N.

Ce principe de collecte des intensités modulées par les différents capteurs d'un groupement permet d'utiliser une fibre multimode et en conséquence de minimiser les pertes de couplage.

A chaque impulsion de lumière de la diode super-luminescente (DSL) correspond une suite d'impulsions en retour échelonnées temporellement selon les différents trajets associés aux divers emplacements des capteurs. Ces différentes impulsions sont séquentiellement aiguillées vers le démodulateur de phase approprié.

En prenant l'hypothèse d'une puissance optique retour moyenne de 4 μW par capteur, le bruit blanc en déphasage est de $10^{-6}$ Rad/√Hz et doit correspondre à $1,5 \cdot 10^{-4}$ Pa/√Hz, pour respecter le rapport S/B de 0 dB à 2,5 kHz avec un niveau de bruit de mer 1/2. La sensibilité de la FASE doit donc être de 70 μRad/Pa soit 35 m de FASE optimisée. La puissance optique utilisable d'une DSL étant de l'ordre du mW, 250 capteurs pourraient être multiplexés sur un même support de transmission optique. Les différents coupleurs de dérivation, épissurages, polariseurs, connecteurs... à insérer limiteront en fait le nombre des capteurs regroupés sur un même support, probablement à une vingtaine seulement par fibre de remontée. Selon les applications envisagées, c'est-à-dire selon le nombre de capteurs à multiplexer, le système comporte donc un certain nombre de systèmes parallèles, chacun d'eux multiplexant quelques dizaines de capteurs.

Les principaux avantages de ce type d'antenne linéaire optique sont donc :

— L'utilisation de capteurs "tout fibre" donc de densité homogène et à faible masse.

— La simplicité de réalisation du capteur et son coût potentiellement bas pour des séries importantes.

— L'emploi d'une fibre intrinsèquement optimisée pour la détection de contraintes plutôt que de déformations, aboutissant à une sensibilité moindre à la température.

— L'emploi d'une méthode d'interférence liée à la longueur de battement et non à la longueur d'onde, permettant de minimiser plus facilement la dispersion des sensibilités.

— L'emploi d'une réponse unique de multiplexage pour un groupement de capteurs et la possibilité de ne pas alimenter les capteurs en énergie électrique.

— La compatibilité de la structure avec les possibilités de multiplexage et de lecture à distance recherchées pour la réalisation d'antennes remorquées à grand nombre de capteurs.

— La possibilité d'amélioration de la sensibilité du capteur par optimisation de la fibre sensible.

**Revendications**

1. Hydrophone à fibre optique, caractérisé en ce qu'il comporte :

— une source à spectre large (S), du type diode super-luminescente, polarisée linéairement,

— une première fibre optique à structure évidée, dite de compensation (10) non soumise au champ de pression à détecter, suivie d'un premier polariseur (11) d'axe à 45° des axes neutres (1′, 2′) de la fibre (10) eux-mêmes à 45° de la polarisation de la source, formant un interféromètre,

— un capteur passif soumis au champ de pression comportant une seconde fibre optique à structure évidée (8) d'axes neutres (1, 2) inversés par rapport à ceux (1′, 2′) de la fibre de compensation couplée au premier polariseur et suivie d'un second polariseur (9) à 45° des axes neutres de la fibre, formant un second interféromètre à la sortie duquel les différences de marche entre les deux polarisations qui ne sont pas dues au champ de pression sont compensées,

— un détecteur (D)

— et un circuit de traitement du rayonnement détecté par le détecteur.

2. Hydrophone à fibre optique selon la revendication 1, caractérisé en ce que, pour déporter le capteur passif d'un porteur sur lequel sont disposés la source, le détecteur et le circuit de traitement, l'hydrophone comporte en outre une fibre monomode à maintien de polarisation (12) reliant la face de sortie du premier polariseur (11) à la face d'entrée de la seconde fibre optique à structure évidée (8) et une fibre de collecte (15) reliant la face de sortie du second polariseur (9), au détecteur D.

3. Hydrophone selon l'une des revendications 1 et 2, caractérisé en ce qu'un modulateur de biréfringence à commande électrique est disposé sur le trajet optique, pour moduler la réponse interférométrique autour des extrêmes.

4. Antenne hydrophonique associant une série d'hydrophones à fibre optique, caractérisée en ce qu'elle comporte :

— une source à spectre large (S), du type diode super-luminescente, modulée en impulsions,

— une première fibre optique à structure évidée suivie d'un premier polariseur à 45° des axes neutres (1′ et 2′) de la fibre, formant un compensateur (23)

— une fibre optique (24) sur laquelle sont répartis N coupleurs de dérivation,

— N capteurs passifs soumis au champ de pression reliés aux N coupleurs de dérivation ($C_1$, $C_2$,... $C_N$) comportant chacun une fibre optique à structure évidée d'axes neutres (1 et 2) inversés par rapport à ceux de la fibre du compensateur, suivie d'un polariseur à 45° des axes neutres de la fibre, et d'une fibre monomode de sortie,

— une fibre multimode de collecte dans laquelle le rayonnement issu des capteurs ($C_1$, $C_2$... $C_N$) est couplé par des épissures formées entre les fibres monomodes (25) de sortie des capteurs et la fibre multimode de collecte,

— un détecteur D,

— et un circuit de traitement du rayonnement détecté par le détecteur, effectuant le démultiplexage et la démodulation des signaux résultant du passage dans les différents capteurs répartis.

5. Antenne selon la revendication 4, caractérisée en ce que la source (S) modulée en amplitude est couplée au compensateur (23) par une fibre monomode (20, 22) sur laquelle est inséré un modulateur de biréfringence (21) à commande électrique, pour moduler la réponse interférométrique au voisinage des extrêmes.

## Claims

1. An optical fiber hydrophone, characterized in that it comprises :

— a broad spectrum source (S) of the linearly polarized superluminescent diode type,

— a first optical compensation fiber (10) with an evacuated structure not subjected to a pressure field to be detected, followed by a first polarizer (11) with an axis at 45° in relation to neutral axes (1' and 2') of the fiber (10) themselves at 45° in relation to the source polarization, constituting an interferometer,

— a passive sensor subjected to the pressure field comprising a second optical fiber (8) with an evacuated structure with neutral axes (1 and 2) inverted in relation to those (1' and 2') of the compensation fiber coupled with the first polarizer and followed by a second polarizer (9) at 45 ° in relation to the neutral axes of the fiber, constituting a second interferometer at the output of which the differences in step between the two polarizations are compensated which are not due to the pressure field,

— a d etector (D)

— and a processing circuit for the radiation detected by the detector.

2. The optical fiber hydrophone as claimed in claim 1, characterized in that, in order to shift the passive sensor from a carrier having the source, the detector and the treatment circuit arranged on it, the hydrophone furthermore comprises a polarization maintain monomode fiber (12) connecting the output surface of the first polarizer (11) with the input surface of the second optical fiber (8) with an evacuated structure and a collect fiber (15) connecting the output surface of the second polarizer (9) with the detector D.

3. A hydrophone as claimed in claim 1 or in claim 2, characterized in that an electrically controlled birefringence modulator is positioned on the optical path in order to modulate the interferometric response at the extremes.

4. A hydrophonic antenna associating a series of optical fiber hydrophones, characterized in that it comprises :

— a broad spectrum source (S) of the superluminescent, pulse modulated type,

— a first optical fiber with an evacuated structure followed by a first polarizer with an axis at 45° in relation to neutral axes (1' and 2') of the fiber, constituting a compensator (23),

— an optical fiber (24) whereon N derivation couplers are distributed,

— N passive sensors subjected to the field of pressure and connected with the N derivation sensors ($C_1$, $C_2$,...$C_N$) each comprising an optical fiber with an evacuated structure having neutral axes (1 and 2) inverted in relation to those of the fiber of the compensator, followed by a polarizer at 45° in relation to neutral axes of the fiber, an d an output monomode fiber,

— a multimode collect fiber, in which the radiation issuing from the sensors ($C_1$, $C_2$,... $C_N$) is coupled by splices formed between the output monomode fibers (25) of the sensors and the multimode collect fiber,

— a detector D

— and a circuit for processing the radiation detected by the detector and causing the demultiplexing and the demodulation of the signal resulting from the passage in the different distributed sensors.

5. The antenna as claimed in claim 1, characterized in that the amplitude modulated source (S) is coupled with the compensator (23) by a monomode fiber (20 and 22) on which there is inserted an electrically controlled birefringence modulator (21) in order to modulate the interferometric response adjacent to the extremes.

## Patentansprüche

1. Lichtleitfaser-Hydrophon, dadurch gekennzeichnet, daß es umfaßt :

— eine linear polarisierte Breitbandspektrum-Quelle (S) vom Typ einer super-lumineszierenden Diode,

— eine erste Lichtleitfaser mit Hohlstruktur (10), die Kompensations-Lichtleitfaser genannt wird und die nicht dem zu erfassenden Druckfeld unterworfen wird, gefolgt von einem ersten Polarisator (11), dessen Achse um 45° zu den neutralen Achsen (1', 2') der Faser (10) geneigt ist, wobei die neutralen Achsen selbst um 45° zur Polarisationsrichtung der Quelle geneigt sind, wodurch ein Interferometer gebildet wird,

— einen passiven Meßwertaufnehmer, der dem Druckfeld unterworfen wird und eine mit dem ersten Polarisator gekoppelte Lichtleitfaser mit Hohlstruktur (8) aufweist, deren neutrale Achsen (1, 2) in bezug auf diejenigen (1′, 2′) der Kompensationsfaser invertiert sind, gefolgt von einem zweiten Polarisator (9), der zu den neutralen Achsen der Faser um 45° geneigt ist, wodurch ein zweites Interferometer gebildet wird, an dessen Ausgang die Laufunterschiede zwischen den zwei Polarisationen, die nicht durch das Druckfeld bewirkt werden, kompensiert werden,

— einen Detektor (D)

— und eine Verarbeitungsschaltung für die vom Detektor erfaßte Strahlung.

2. Lichtleitfaser-Hydrophon gemäß Anspruch 1, dadurch gekennzeichnet, daß zum Verschieben des passiven Meßwertaufnehmers gegenüber einem Träger, auf dem die Quelle, der Detektor und die Verarbeitungsschaltung angeordnet sind, das Hydrophon außerdem eine Einmodenfaser mit Polarisationserhaltung (12), die die Ausgangsseite des ersten Polarisators (11) mit der Eingangsseite der zweiten Lichtleitfaser mit Hohlstruktur (8) verbindet, und eine Sammelfaser (15), die die Ausgangsseite des zweiten Polarisators (9) mit dem Detektor (D) verbindet, aufweist.

3. Hydrophon gemäß einem der Ansprüche 1 und 2, dadurch gekennzeichnet, daß im optischen Weg ein elektrisch gesteuerter doppelbrechender Modulator angeordnet ist, um die interferometrische Antwort um die Extrempunkte zu modulieren.

4. Hydrophonische Antenne, die eine Reihe von Lichtleitfaser-Hydrophonen verbindet, dadurch gekennzeichnet, daß sie umfaßt :

— eine impulsmodulierte Breitbandspektrum-Quelle (S) vom Typ einer superlumineszierenden Diode,

— eine erste Lichtleitfaser mit Hohlstruktur, gefolgt von einem ersten Polarisator, dessen Achse um 45° gegen die neutralen Achsen (1′ und 2′) der Faser geneigt sind, wodurch ein Kompensator (23) gebildet wird,

— eine Lichtleitfaser (24), auf der N Verzweigungskoppler verteilt sind,

— N passive Meßwertaufnehmer, die dem Druckfeld unterworfen werden und die mit den N Abzweigungskopplern (C1, C2, ... CN) verbunden sind und die jeweils eine Lichtleitfaser mit Hohlstruktur, deren neutrale Achsen (1 und 2) in bezug auf diejenigen der Kompensationsfaser invertiert sind, umfaßt, gefolgt von einem Polarisator, dessen Achse um 45° gegen die neutralen Achsen der Faser geneigt sind, und einer Einmoden-Ausgangsfaser,

— eine Multimoden-Sammelfaser, in der die von den Meßwertaufnehmem (C1, C2,... CN) ausgegebene Strahlung durch Spleißungen gekoppelt werden, die zwischen den Einmoden-Ausgangsfasern (25) der Meßwertaufnehmer und den Multimoden-Sammelfasem ausgebildet sind,

— einen Detektor (D)

— und eine Verarbeitungsschaltung für die vom Detektor erfaßte Strahlung, die die Demultiplexierung und die Demodulation der Signale ausführt, die sich aus dem Durchgang durch die verschiedenen, verteilten Meßwertaufnehmer ergeben.

5. Antenne gemäß Anspruch 4, dadurch gekennzeichnet, daß die amplitudenmodulierte Quelle (S) über eine Einmodenfaser (20, 22), in die ein elektrisch gesteuerter doppelbrechender Modulator (21) eingesetzt ist, mit dem Kompensator (23) gekoppelt ist, um die interferometrische Antwort in der Umgebung der Extrempunkte zu modulieren.

FIG.1

FIG.3

FIG.2a

FIG.2b

FIG.2c

EP 0 326 476 B1

FIG. 4

FIG.5